# NEUE EUROPÄISCHE PATENTSCHRIFT

(11) **EP 1 840 402 B2**
(45) Veröffentlichungstag und Bekanntmachung des Hinweises auf die Entscheidung über den Einspruch: **11.09.2013**
(45) Hinweis auf die Patenterteilung: 01.09.2010
(21) Anmeldenummer: 07006233.6
(22) Anmeldetag: 27.03.2007
(51) Int. Cl.: F16D 65/00, F16D 65/78

(54) **Elektromagnetische Bremse mit Antikondensationsheizung**
Electromagnetic brake with anti-condensation heating
Frein électromagnétique doté d'un chauffage anti-condensation

(30) Priorität: 30.03.2006 DE 102006015232
(43) Veröffentlichungstag der Anmeldung: 03.10.2007
(73) Patentinhaber: Pintsch Bamag Antriebs- und Verkehrstechnik GmbH, 46537 Dinslaken (DE)
(72) Erfinder: Vajic, Ivica, 42655 Solingen (DE); Thonen, Michael, 45133 Essen (DE); Neth, André, 46539 Dinslaken (DE)
(74) Vertreter: Grünecker, Kinkeldey, Stockmair & Schwanhäusser

(56) Entgegenhaltungen:
- EP-A- 0 999 081
- EP-B1- 0 444 011
- EP-B1- 0 837 253
- DE-A- 513 762
- DE-A1- 2 033 181
- DE-A1- 2 726 068
- US-A- 4 023 655
- US-A- 4 667 781
- US-A1- 2005 045 435

## Beschreibung

Die Erfindung betrifft eine elektromagnetische Bremse, die mit einer Welle verbindbar ausgestaltet ist und mit wenigstens einem gegenüber der Drehbewegung der Welle stationären Bremsenelement, mit wenigstens einem mit der Welle rotierenden Bremsenelement und mit einer ein Elektroheizelement umfassenden Antikondensationsheizung versehen ist, wobei das Elektroheizelement an dem wenigstens einen stationären Bremsenelement angeordnet ist und sich koaxial um die Längsrichtung der Bremse erstreckt.

Die Beheizung von Bremsen ist aus dem Stand der Technik bekannt. So ist in der WO-A-91/13789 eine mechanische Bremsvorrichtung beispielsweise für Magnetschwebebahnen bekannt. Die Bremse ist mit beheizbaren Bremsbelägen ausgestattet, welche die Reif- oder die Eisbildung auf den Bremsbelägen verhindern sollen. Zur Wärmeerzeugung wird eine in den Bremsbelag hinein ragende Heizpatrone verwendet.

Bei der Trommelbremse der US-A-4,023,655 sind an den Bremsbacken Heizvorrichtungen angeordnet, die verhindern, dass sich Feuchtigkeit auf den Bremsbelägen bildet und die Bremswirkung dadurch negativ beeinflusst wird.

Ein anderer Weg ist in der US-A-5,266,773 beschrieben. Gemäß der Lehre dieser Druckschrift ist vorgesehen, einen Strom durch die zu erwärmenden Bremsenteile zu leiten, so dass diese selbst als Heizelemente dienen und sich erwärmen. Auf diese Weise soll die Eisbildung unterdrückt werden.

Der Nachteil dieser beiden Bremsen liegt in einer nur unzureichenden Erwärmung des Bremseninnenraums sowie in einem teilweise unzureichenden Schutz der Heizvorrichtungen bei Montage und Wartung.

Den nächstliegenden Stand der Technik bildet die elektrisch beheizte Scheibenbremse der US-A-4,667,781, die für beispielsweise Flugzeugräder benutzt wird. Um die Vereisung der Bremsscheiben zu vermeiden, wird die Bremse mittels eines Widerstandsdrahtes erwärmt. Der Widerstandsdraht ist dabei mäanderförmig in Form eines Hohlzylinders gebogen, der in eine Drehmomentübertragungshülse oder eine Schildplatte eingepasst werden kann.

Der Nachteil dieser Bremse liegt in der großen Anzahl von Montageschritten, die beim Einbau des hülsenförmigen Widerstandsdrahtes notwendig sind und in der aufwändigen Wartung der Heizvorrichtung.

Der Erfindung liegt daher die Aufgabe zugrunde, eine elektromagnetische Bremse zu schaffen, die bei einem geringem Montageaufwand zu einer schnellen und gleichmäßigen Erwärmung der Bremse führt und bei der die Gefahr von Beschädigungen bei der Montage verringert ist.

Diese Aufgabe wird erfindungsgemäß für eine Bremse der eingangs genannten Bauart dadurch gelöst, dass das Elektroheizelement in einer koaxial zur Längsrichtung der Bremse verlaufenden Aufnahmenut des stationären Bremsenelements angeordnet ist und dass entweder das wenigstens eine stationäre Brennelement einen im Wesentlichen scheibenförmigen Spulenkörper bildet, welcher einen Elektromagneten trägt oder das wenigstens eine stationäre Brennelement als eine wellenseitige Flanschplatte ausgestaltet ist, welche Befestigungsmittel zur Anbringung der Bremse an einer stationären Halteeinrichtung aufweist.

Durch diese Maßnahme wird zum Einen erreicht, dass das Elektroheizelement in der Aufnahmenut einfach vormontiert werden kann und dass zum Anderen das Elektroheizelement über die Nut das stationäre Bremsenelement direkt beheizt, so dass das stationäre Bremsenelement als Wärmesenke und Heizkörper dient.

Ausgehend von dieser Lösung sind im Folgenden weitere Ausgestaltungen beschrieben, die jeweils für sich die erfindungsgemäße Lösung vorteilhaft weiterentwickeln. Die einzelnen Weiterentwicklungen können beliebig miteinander kombiniert werden, je nachdem, ob der mit der Weiterentwicklung jeweils verbundene Vorteil bei einer konkreten Anwendung der Erfindung in der Praxis benötigt wird oder nicht.

So ist die erfindungsgemäße Lösung insbesondere bei einer Bremse von Vorteil, bei der wenigstens ein Teil der rotierenden Bremsenelemente, in erster Linie die wenigstens eine rotierende Bremsscheibe, sowie ein Teil der stationären Bremsenelemente, beispielsweise die Ankerscheibe und die feststehende Bremsscheibe, in einem abgeschlossenen Bremseninnenraum angeordnet sind. Dieser Bremseninnenraum kann insbesondere wasserdicht gegenüber der Umgebung verschlossen sein. Ferner kann das stationäre Bauelement an den Bremseninnenraum angrenzen.

Gerade bei wasserdichten Bremsen, bei denen ein Gehäuse einen hermetisch abgeschlossenen Innenraum umgibt, besteht die Gefahr, dass sich Kondensationswasser im Bremseninnenraum bildet, das zumindest in der flüssigen Phase nicht mehr entweichen kann. Da derartige Bremsen, beispielsweise im Unterschied zur Flugzeugbremse der US-A-4,667,781, auf Schiffen oder Krananlagen längere Zeit ungewartet laufen und stärksten Witterungsschwankungen unterworfen sind, ist hier die Gefahr von Kondensationswasserbildung besonders groß. Durch eine Antikondensationsheizung kann diese Gefahr verringert werden.

Um den Bremseninnenraum möglichst rasch aufzuheizen, kann in einer weiteren vorteilhaften Ausgestaltung das stationäre Bremsenelement, welches das Elektroheizelement in der Nut trägt, an den Bremseninnenraum angrenzen oder im Bremseninnenraum angeordnet sein und somit diesen direkt beheizen.

Dies kann beispielsweise dadurch erreicht werden, dass die Aufnahmenut an dem im Wesentlichen scheibenförmigen Spulenkörper ausgebildet ist, welcher auch die Wicklungen des Elektromagneten trägt. Da der Arbeitsluftspalt der Ankerscheibe meist direkt am Elektromagneten ausgebildet ist, grenzt der Spulenkörper an den Bremseninnenraum, so dass seine Beheizung zu einer direkten Beheizung des Innenraums führt. Der Spulenkörper ist vorzugsweise aus einem ferromagnetischen und gut wärmeleitenden Werkstoff wie einem Eisen oder einer Eisenlegierung gefertigt, um das erzeugte Magnetfeld und die von der Antikondensationsheizung erzeugte Wärme möglichst verlustfrei weiterzuleiten.

Die Heizwirkung der Antikondensationsheizung kann ferner dadurch erhöht werden, dass das Elektroheizelement an der dem Bremseninnenraum zugewandten Seite des stationären Bremsenelements angeordnet ist, so dass die vom Elektroheizelement ausgesandte Wärmestrahlung auch direkt auf angrenzende Bremsenelemente im Bremseninnenraum fällt und diese zusätzlich erwärmt.

Um zu Wartungszwecken einen einfachen Zugang zum Elektroheizelement zu gewährleisten, kann die Aufnahmenut bei einer Bremse, bei der der Spulenkörper an einem motorseitigen Flansch wiederholt lösbar befestigt ist, in einer der aneinanderliegenden Flächen von Flansch und Spulenkörper angeordnet sein. Dies kann insbesondere dann von Vorteil sein, wenn am Spulenkörper die Bremsscheibe und die Ankerscheibe gehalten sind und der Spulenkörper mit diesen zusammen ohne weitere Demontagen vom Flansch gelöst werden kann. Bei dieser Ausgestaltung muss nämlich lediglich der Spulenkörper vom Flansch gelöst werden, um Zugang zum Elektroheizelement zu erhalten.

Das Elektroheizelement kann zum Zwecke einer einfachen und raschen Montage wenigstens stellenweise, vorzugsweise ohne Ausbildung von wärmeisolierenden Luftspalten, zwischen dem Elektroheizelement und den Nutwänden, in die Aufnahmenut eingeklebt oder eingegossen sein. Vorzugweise wird dabei ein Klebstoff oder eine Vergussmasse verwendet, welcher wärmeleitfähig ist. Unter guter Wärmeleitfähigkeit wird dabei eine in der Größenordnung von Metallen liegenden Wärmeleitfähigkeit verstanden.

Ferner kann das Elektroheizelement durch einen Klemmsitz in der Nut gehalten sein, so dass keine zusätzlichen Maßnahmen zur Befestigung notwendig sind. Der Klemmsitz erlaubt eine transportsichere Vormontage und im Wartungsfall einen einfachen Austausch des Elektroheizelements.

Als Elektroheizelement kann beispielsweise ein Heizdraht verwendet werden. Der Heizdraht kann bifilar aus zwei Heizleitern aufgebaut sein, wobei vorzugsweise die Strom- und Wicklungsrichtung so aufeinander abgestimmt ist, dass sich die Magnetfelder, welche von den stromdurchflossenen Heizleitern erzeugt werden, der beiden Heizleiter aufheben. Alternativ kann auch ein einzelner Heizleiter verwendet werden, der so gelegt ist, dass zwei konzentrische Schlaufen mit entgegengesetzter Stromrichtung entstehen. Auf diese Weise kann die Heizleistung erhöht werden.

Zur Aufnahme eines längeren Heizdrahtes oder eines zweiten Drahtes können gemäß einer weiteren vorteilhaften Ausgestaltung weitere koaxiale Aufnahmenuten im stationären Bremsenelement vorgesehen sein.

In einer weiteren, ebenfalls für sich betrachtet vorteilhaften Ausgestaltung weist das E lektroheizelement elektrische Versorgungsleitungen auf, die durch eine Versorgungsöffnung aus der Bremse, beispielsweise in einen Schaltkasten, geführt sind. Diese Versorgungsöffnung kann gleichzeitig von elektrischen Versorgungsleitungen des Elektromagneten oder von Leitungen für Sensoren oder Schalter innerhalb der Bremse genutzt werden, so dass sämtliche elektrischen Leitungen aus dem Inneren der Bremse an einer Stelle nach außen geführt werden, was die Kabelführung und den Anschluss der Bremse an einen Schaltkasten erheblich erleichtert.

Um die Versorgungsleitungen von der wenigstens einen Aufnahmenut zur Versorgungsöffnung zu führen, kann eine im Wesentlichen radiale Verbindungsnut vorgesehen sein, welche die wenigstens eine Aufnahmenut mit der Versorgungsöffnung verbindet. Alternativ kann die Aufnahmenut auch so geführt sein, dass sie in der Versorgungsöffnung mündet.

Die Aufnahmenut kann in einer weiteren Ausgestaltung auch an der Flanschplatte angeordnet sein, welche beispielsweise am wellenseitigen Ende der Bremse angeordnet ist. Eine solche Flanschplatte kann als Befestigungsflansch dienen, um die Bremse an beispielsweise einem Elektromotor oder einem Lagerblock zu befestigen. Durch die Verwendung unterschiedlich ausgestalteter Flanschplatten ist es möglich, gemäß dem Baukastenprinzip eine Bremse für unterschiedliche Anbausituationen zu erzeugen, da lediglich die Flanschplatte an die vorliegende Anbausituation angepasst werden muss.

Im Folgenden wird die Erfindung anhand dreier Ausführungsformen beispielhaft beschrieben, wobei auf die Zeichnungen, auf denen die Ausführungsformen schematisch dargestellt sind, Bezug genommen wird. Die Ausführungsformen geben lediglich eine Möglichkeit zur Umsetzung der Erfindung in die Praxis wieder. Wie aus der obigen Darstellung hervorgeht, können einzelne Merkmale hinzugefügt oder weg gelassen werden, wenn es nicht auf die mit diesen Merkmalen verbundenen Vorteile ankommt.

Es zeigen:
- Fig. 1: eine schematische Darstellung einer ersten Ausführungsform einer erfindungsgemäß mit einer Antikondensationsheizung ausgestalteten elektromagnetischen Bremse im Längsschnitt;
- Fig. 2: eine schematische Darstellung eines stationären Bremsenelements der Ausführungsform der Fig. 1 in einer Stirnansicht entlang des Pfeiles II der Fig. 1;
- Fig. 3: eine schematische Darstellung einer zweiten Ausführungsform einer erfindungsgemäß mit einer Antikondensationsheizung ausgestatteten elektromagnetischen Bremse in einem Längsschnitt;
- Fig. 4: eine schematische Darstellung eines stationären Bauelements der elektromagnetischen Bremse der Fig. 3 in einer Stirnansicht entlang des Pfeiles IV der Fig. 3;
- Fig. 5: eine schematische Darstellung einer dritten Ausführungsform einer erfindungsgemäß mit einer Antikondensationsheizung ausgestatteten elektromagnetischen Bremse in einem Längsschnitt.

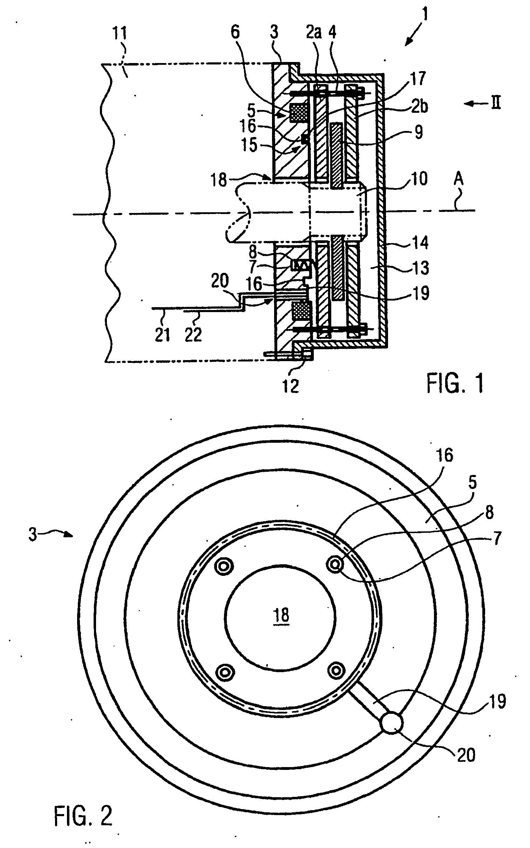

Zunächst wird der Aufbau einer erfindungsgemäßen elektromagnetischen Bremse 1 mit Bezug auf die Fig. 1 beschrieben.

Die elektromagnetische Bremse 1 weist wenigstens eine in Längs- bzw. axialer Richtung A bewegliche Ankerscheibe 2a und wenigstens eine in axialer Richtung fixierte oder festgestellte Bremsscheibe 2b auf, die drehstarr mit einem stationären Spulenkörper 3 aus einem ferromagnetischen Werkstoff verbunden sind, beispielsweise über am Umfang der Bremse 1 verteilte Schrauben 4.

Der Spulenkörper 3 ist mit einer zur Längsrichtung A der Bremse 1 koaxialen, ringförmigen Aussparung 5 versehen, in der die Wicklungen einer elektromagnetischen Spule 6 aufgenommen sind. Ferner ist der Spulenkörper 3 mit in Umfangsrichtung voneinander beabstandeten Ausnehmungen 7 versehen, in welchen sich jeweils eine Druckfeder 8 befindet. Jede Druckfeder 8 stützt sich zwischen dem Spulenkörper 3 und der dem Spulenkörper 3 zugewandten Ankerscheibe 2a ab.

Zwischen der Ankerscheibe 2a und der feststehenden Bremsscheibe 2b befindet sich eine rotierende Bremsscheibe 9, welche drehstarr mit einer Welle 10 verbindbar ist. Die Welle 10 ist nicht Teil der Bremse 1, sondem Teil eines Antriebssystems, welches durch die elektromagnetische Bremse bei deren Betätigung abgebremst wird.

Die Bremse 1 ist an einer Halterung 11, beispielsweise einem Lagerbock oder einem Schild eines Elektromotors angebracht.

Die elektromagnetische Bremse 1 schließt einen Bremseninnenraum 13 ein, in dem die gegenüber der sich drehenden Welle 10 stationären Bremsenelemente 2a, 2b, 3 angeordnet sind, bzw. an den sie angrenzen. Der Bremseninnenraum 13 kann insbesondere, wie in Fig. 1 dargestellt ist, von einem im Wesentlichen glockenförmigen Gehäuse 14 umschlossen sein, das, insbesondere bei wasserdichten Bremsen, hermetisch mit dem Spulenkörper 3 abschließt. Es kann durch Schrauben 12 über einen flanschartigen Ring am Gehäuse 14 mit dem Spulenkörper 3 verbunden werden.

Um zu vermeiden, dass im Bremseninnenraum 13 bei stark schwankenden Temperaturen Feuchtigkeit kondensiert und die im Bremseninnenraum 13 liegenden oder an dem Bremseninnenraum 13 angrenzenden Bremsenelemente korrodieren, ist die elektromagnetische Bremse 1 mit einer Antikondensationsheizung 15 versehen.

Die Antikondensationsheizung 15 umfasst wenigstens eine in einem stationären Bremsenelement, gemäß der Fig. 1 beispielsweise dem Spulenkörper 3 ausgebildete, in Umfangsrichtung verlaufende, im Wesentlichen ringförmige Aufnahmenut 16 und ein Elektroheizelement 17. Die Aufnahmenut 16 liegt koaxial zur axialen Richtung A der Bremse 1 und der Welle 10, wie insbesondere aus Fig. 2 deutlich wird. Fig. 2 zeigt den Spulenkörper 3 ohne die übrigen Bauelemente der Bremse 1, wobei der Übersichtlichkeit halber sämtliche nicht mit der Erfindung oder einer Weiterbildung derselben in Bezug stehenden Merkmale weggelassen sind.

In die Aufnahmenut 16 ist ein als Elektroheizelement dienender Heizdraht 17 eingelegt und kann wenigstens stellenweise mit der Aufnahmenut 16, vorzugsweise ohne die Bildung von Luftspalten, verklebt oder vergossen werden. Als Kleber oder Vergussmaterial kommt dabei vorzugsweise ein wärmeleitender Stoff infrage, dessen Wärmeleitfähigkeit im Bereich der Wärmeleitfähigkeit von Metallen liegt.

Die Aufnahmenut 16 ist bei der Ausführungsform der Fig. 1 in radialer Richtung zwischen der ringförmigen Aussparung 5 für die Spule 6 des Elektromagneten und einer Öffnung 18 der Bremse 1, in welche die Welle 10 eingesteckt wird, angeordnet.

Über eine in radialer Richtung verlaufende Verbindungsnut 19 ist die Aufnahmenut 16 mit einer durch den Spulenkörper 3 hindurchgehenden Versorgungsöffnung 20 verbunden. Die Versorgungsöffnung 20 ist ebenfalls mit der Aussparung 5 für die Spule 6 verbunden. Sowohl die elektrischen Versorgungsleitungen 21 der Spule 6 als auch die elektrischen Versorgungsleitungen 22 der Antikondensationsheizung 15 bzw. des Elektroheizelements verlaufen durch die Versorgungsöffnung 20 nach außerhalb der Bremse 1, wie in Fig. 1 gezeigt ist.

Wie zu erkennen ist, verläuft die Verbindungsnut 19 in radialer Richtung zwischen der Aufnahmenut 15 und der Aussparung 5 für die in Fig. 2 nicht dargestellte Spule 6. Im Betrieb wird das Elektroheizelement über einen in der Fig. 1 nicht dargestellten manuell oder über einen mittels Temperatur- und/oder Feuchtesensor automatisch betätigten Schalter mit Strom versorgt. Das Elektroheizelement heizt die gesamte Bremse 1 über den Spulenkörper 3 als Wärmesenke auf. Da das Elektroheizelement 17 zudem der wenigstens einen Ankerscheibe 2a direkt gegenüberliegt, wird diese durch die Wärmestrahlung vom Elektroheizelement schneller aufgeheizt.

Bei starken Temperaturschwankungen kann durch das Beheizen der Bremse und des Bremseninnenraumes 13 ein Auskondensieren der Feuchtigkeit im Bremseninnenraum 13 vermieden werden.

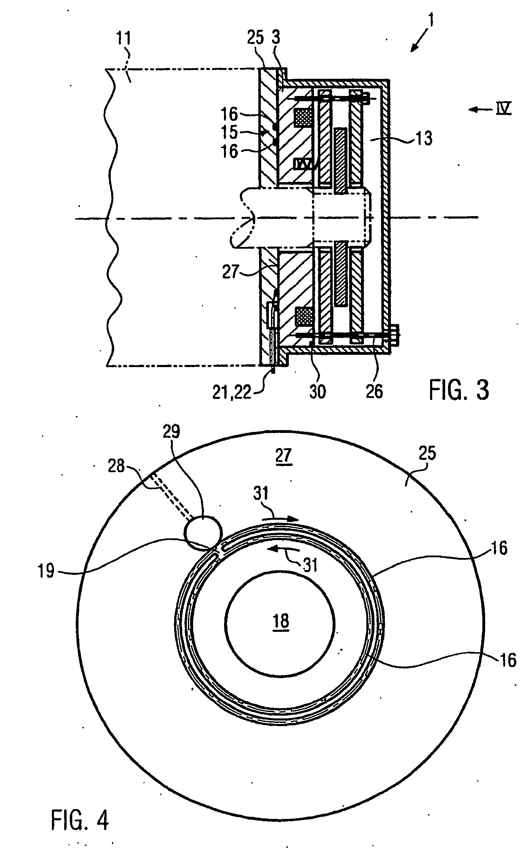

In Fig. 3 ist eine weitere Ausführungsform einer erfindungsgemäß ausgestalteten elektromagnetischen Bremse 1 schematisch im Längsschnitt dargestellt. Der Kürze halber wird im Folgenden lediglich auf die Unterschiede zur oben beschriebenen Ausführungsform der Fig. 1 und 2 eingegangen, wobei für aus der oben beschriebenen Ausführungsform bekannte Bauelemente dieselben Bezugszeichen verwendet werden.

Im Unterschied zur Bremse 1 der Fig. 1 ist die Bremse 1 der Fig. 3 mit einer Flanschplatte 25 als einem weiteren stationären Bremsenelement an ihrem wellenseitigen Ende versehen. Die Flanschplatte 25 ist insbesondere zwischen der Halterung 11 und dem Spulenkörper 3 angeordnet. Durch verschieden ausgestaltete Flanschplatten 25 kann eine Bremse 1 desselben Typs an unterschiedlich großen und unterschiedlich ausgestalteten Halterungen 11 verwendet werden, ohne dass an der Bremse 1 bauliche Änderungen vorgenommen werden müssen. Hierzu ist die Flanschplatte 25 fest, insbesondere bewegungsstarr, mit sowohl dem Spulenkörper 3 als auch der Halterung 11 verbunden.

Das im Wesentlichen glockenförmigen Gehäuse 14 schließt bei der Ausführung der Fig. 3 mit der Flanschplatte 25 ab und ist durch stirnseitige Schrauben 26, die durch die Ankerscheibe 2a und die feste Bremsscheibe 2b reichen können, am Spulenkörper 3 befestigt.

Ferner ist im Unterschied zur Ausführungsform der Fig. 1 die Antikondensationsheizung 15 bei der Bremse der Fig. 3 an der Flanschplatte 25, insbesondere an deren dem Bremseninnenraum 13 zugewandten Stirnseite 27 angeordnet und liegt so zwischen dem Spulenkörper 3 und der Flanschplatte 25. Die Antikondensationsheizung 15 steht dabei in Kontakt mit dem Spulenkörper 3 und berührt diesen, so dass ein möglichst verlustfreier Wärmeübergang entweder direkt vom Elektroheizelement in den Spulenkörper 3 und/oder über die Flanschplatte 25 zum Spulenkörper 3 erfolgt. Diese Ausgestaltung ermöglicht es, dass der Spulenkörper mitsamt der Ankerscheibe 2a und der Bremsscheibe 2b von der Flanschplatte 25 gelöst werden kann, ohne dass die Bremse weiter auseinandergebaut werden muss.

Schließlich weist die Antikondensationsheizung 15 der Fig. 3 zwei koaxial zueinander in Umfangsrichtung verlaufende Aufnahmenuten 16 auf, wie insbesondere aus der Fig. 4 hervorgeht, in der die Flanschplatte 25 in einer Stirnansicht entlang des Pfeiles IV der Fig. 3 ohne die übrigen Bauelemente der Bremse 1 dargestellt ist.

Wie zu erkennen ist, verlaufen die beiden Aufnahmenuten 16 parallel zueinander. An einer Stelle entlang des Umfanges sind die beiden Aufnahmenuten 16 über die radial verlaufende Verbindungsnut 19 miteinander verbunden.

In jede der beiden Aufnahmenuten 16 ist ein Elektroheizelement beispielsweise in Form eines bifilaren Widerstandsdrahtes eingelegt, wobei die Stromrichtungen in den beiden Widerstandsdrähten einander entgegengesetzt sind, wie dies schematisch durch die Pfeile 31, welche die Stromrichtung für die Aufnahmenutenanzeigen, dargestellt ist. Auf diese Weise heben sich die Magnetfelder der in den Aufnahmenuten 16 angeordneten Elektroheizelemente 17 auf.

Über eine in die Verbindungsnut 19 gelegte Leitung sind die beiden in den Aufnahmenuten 16 angeordneten Elektroheizelemente miteinander verbunden. Bei dieser Ausgestaltung kann allerdings auch ein einzelner durchgängiger Heizdraht verwendet werden, der in den beiden Aufnahmenuten 16 angeordnet ist. Dies kann beispielsweise dadurch erreicht werden, dass der Heizdraht 17 zunächst in Form einer Acht gelegt wird und dann jeweils eine Schlaufe dieser Acht in je einer der beiden Aufnahmenuten 16 platziert wird. Die Zuleitungen 21, 22 sind durch eine radiale Bohrung 28 in der Flanschplatte 25 nach außen geführt. Dabei kann die Bohrung 28 in radialer Richtung innen in einem Sackloch 29 in der Flanschplatte 25 münden.

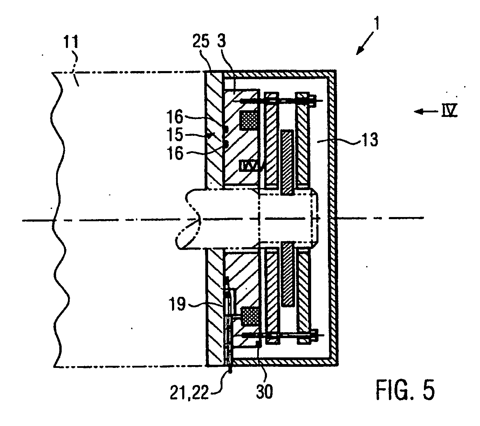

Von den oben beschriebenen Ausführungsformen sind weitere Modifikationen möglichen. So kann selbstverständlich auch der Spulenkörper 3 mit zwei Aufnahmenuten 16 versehen sein, wie dies in Fig. 5 gezeigt ist, wobei die Aufnahmenuten auf der dem Bremseninnenraum 13 abgewandten Stirnseite des Spulenkörpers 3 angeordnet sind. Auch bei dieser Ausgestaltung liegt das Heizelement, wie bei der Ausführungsform der Fig. 3 und 4, im Bereich zwischen dem Spulenkörper 3 und der Flanschplatte 25. Außerdem können die beiden Aufnahmenuten 16 über eine im Wesentlichen radial verlaufende Verbindungsnut 19 mit der Öffnung 20 für die Versorgungsleitungen der Spule 6 verbunden sein.

Schließlich kann, wie in Fig. 5 schematisch gezeigt, ein Temperatur- und/oder Feuchtesensor 30 vorgesehen sein, der in Abhängigkeit von einer gemessenen Temperatur oder Feuchte im Bremseninnenraum die Versorgung der Antikondensationsheizung 15 mit elektrischer Energie frei gibt oder abschaltet, so dass auf eine außerhalb der Bremse 1 angeordnete Schaltung verzichtet werden kann.

## Patentansprüche

1. Elektromagnetische Bremse (1), die mit einer sich in einer Längsrichtung (A) der Bremse (1) erstreckenden Welle (10) verbindbar ausgestaltet und mit wenigstens einem gegenüber der Drehbewegung der Welle (10) stationären Bremsenelement (2a, 2b, 3, 25), mit wenigstens einem mit der Welle rotierenden Bremsenelement (9) und mit einer ein Heizelement (17) umfassenden Antikondensationsheizung (15) versehen ist, wobei das Heizelement (17) an dem wenigstens einen stationären Bremsenelement (3, 25) angeordnet ist und sich koaxial um die Längsrichtung (A) der Bremse (1) erstreckt, **dadurch gekennzeichnet, dass** das Heizelement (17) in wenigstens einer koaxial zur Längsrichtung (A) der Bremse (1) verlaufenden Aufnahmenut (16) des stationären Bremsenelements (2a, 2b,3, 25) angeordnet ist und dass entweder das wenigstens eine stationäre Bremselement (3) einen im Wesentlichen scheibenförmigen Spulenkörper (3) bildet, welcher einen Elektromagneten trägt, oder das wenigstens eine stationäre Bremsenelement als eine wellenseitige Flanschplatte (25) ausgestaltet ist, welche Befestigungsmittel zur Anbringung der Bremse an einer stationären Halterung aufweist.

2. Elektromagnetische Bremse (1) nach Anspruch 1, **dadurch gekennzeichnet, dass** das Heizelement (17) ein Heizdraht ist.

3. Elektromagnetische Bremse (1) nach Anspruch 2, **dadurch gekennzeichnet, dass** der Heizdraht bifilar aufgebaut ist.

4. Elektromagnetische Bremse (1) nach einem der oben genannten Ansprüche, **dadurch gekennzeichnet, dass** das Heizelement (17) in die Aufnahmenut (16) eingeklebt ist.

5. Elektromagnetische Bremse (1) nach Anspruch 4, **dadurch gekennzeichnet, dass** ein wärmeleitender Klebstoff in die Aufnahmenut (16) eingebracht ist.

6. Elektromagnetische Bremse (1) nach einem der oben genannten Ansprüche, **dadurch gekennzeichnet, dass** eine zweite koaxiale Aufnahmenut (16) vorgesehen ist, in der ein Heizdraht (17) eingelegt ist.

7. Elektromagnetische Bremse (1) nach Anspruch 6, **dadurch gekennzeichnet, dass** ein zweiter Heizdraht (17) in der zweiten koaxialen Aufnahmenut (16) eingelegt ist.

8. Elektromagnetische Bremse (1) nach einem der oben genannten Ansprüche, **dadurch gekennzeichnet, dass** die Bremse (1) eine Magnetspule (6) mit elektrischen Versorgungsleitungen (21) aufweist, die durch eine Versorgungsöffnung (20) aus der Bremse geführt sind, und dass das Heizelement (17) elektrische Versorgungsleitungen (22) aufweist, die ebenfalls durch die Versorgungsöffnung (20) geführt sind.

9. Elektromagnetische Bremse (1) nach Anspruch 8, **dadurch gekennzeichnet, dass** das Heizelement (17) über eine im Wesentlichen radial verlaufende Verbindungsnut (19) mit der Versorgungsöffnung (20) verbunden ist.

10. Elektromagnetische Bremse (1) nach einem der oben genannten Ansprüche, **dadurch gekennzeichnet, dass** ein von der Bremse umschlossener Bremseninnenraum (13) vorgesehen ist, in dem wenigstens ein rotierendes Element angeordnet ist, und dass das Heizelement (17) auf der dem Bremseninnenraum zugewandten Seite des wenigstens einen stationären Elements angeordnet ist.

11. Elektromagnetische Bremse (1) nach einem der oben genannten Ansprüche, **dadurch gekennzeichnet, dass** die Antikondensationsheizung (15) in einer der aneinandergrenzenden Flächen des Spulenkörpers (3) und der motorseitigen Flanschplatte (25) angeordnet ist.

12. Elektromagnetische Bremse (1) nach einem der oben genannten Ansprüche, **dadurch gekennzeichnet, dass** eine Versorgungsleitung (22) der Antikondensationsheizung (15) in radialer Richtung aus dem stationären Bauteil (2a, 2b, 3, 25) der Bremse geführt ist.

## Claims

1. Electromagnetic brake (1), which is configured so as to be connectable to a shaft (10) extending in a longitudinal direction (A) of the brake (1) and is provided with at least one brake member (2a, 2b, 3, 25) which is stationary with respect to the rotational movement of the shaft (10), with at least one brake member (9) rotating together with the shaft, and with an anti-condensation heater (15) comprising a heating element (17), the heating element (17) being arranged on the at least one stationary brake element (3, 25) and extending coaxially about the longitudinal direction (A) of the brake (1), **characterised in that** the heating element (17) is arranged in at least one receiving groove (16), extending coaxially with the longitudinal direction (A) of the brake (1), of the stationary brake member (2a, 2b, 3, 25), and **in that** either the at least one stationary brake member (3) forms a substantially disc-shaped coil former (3) which carries an electromagnet, or the at least one stationary brake member is formed as a flange plate (25) on the shaft side, comprising fastening means for attaching the brake to a stationary mounting.

2. Electromagnetic brake (1) according to claim 1, **characterised in that** the heating element (17) is a resistance wire.

3. Electromagnetic brake (1) according to claim 2, **characterised in that** the resistance wire is of a bifilar construction.

4. Electromagnetic brake (1) according to any one of the preceding claims, **characterised in that** the heating element (17) is adhesively bonded into the receiving groove (16).

5. Electromagnetic brake (1) according to claim 4, **characterised in that** a thermally conductive adhesive is placed in the receiving groove (16).

6. Electromagnetic brake (1) according to any one of the preceding claims, **characterised in that** a second coaxial receiving groove (16) is provided, in which a resistance wire (17) is laid.

7. Electromagnetic brake (1) according to claim 6, **characterised in that** a second resistance wire (17) is laid in the second coaxial receiving groove (16).

8. Electromagnetic brake (1) according to any one of the preceding claims, **characterised in that** the brake (1) comprises a magnet coil (6) having electric supply lines (21) which are guided out of the brake through a supply opening (20), and **in that** the heating element (17) comprises electric supply lines (22) which are also guided through the supply opening (20).

9. Electromagnetic brake (1) according to claim 8, **characterised in that** the heating element (17) is connected to the supply opening (20) via a substantially radially extending connecting groove (19).

10. Electromagnetic brake (1) according to any one of the preceding claims, **characterised in that** a brake interior (13) is provided, which is enclosed by the brake and in which at least one rotating member is arranged, and **in that** the heating element (17) is arranged on the side of the at least one stationary member facing the brake interior.

11. Electromagnetic brake (1) according to any one of the preceding claims, **characterised in that** the anti-condensation heater (15) is arranged in one of the mutually adjacent surfaces of the coil former (3) and of the flange plate (25) on the motor side.

12. Electromagnetic brake (1) according to any one of the preceding claims, **characterised in that** a supply line (22) of the anti-condensation heater (15) is guided out of the stationary component (2a, 2b, 3, 25) of the brake in the radial direction.

## Revendications

1. Frein électromagnétique (1) qui est conçu pour pouvoir être relié à un arbre (10) s'étendant dans un sens longitudinal (A) du frein (1), et qui est pourvu d'au moins un élément de frein (2a, 2b, 3, 25) fixe par rapport au mouvement rotatif de l'arbre (10), d'au moins un élément de frein (9) tournant avec l'arbre, et d'un chauffage anti-condensation (15) comprenant un élément chauffant (17), l'élément chauffant (17) étant disposé sur ledit élément de frein fixe (3, 25) et s'étendant coaxialement par rapport au sens longitudinal (A) du frein (1), **caractérisé en ce que** l'élément chauffant (17) est disposé dans au moins une rainure de réception (16) de l'élément de frein fixe (2a, 2b, 3, 25) qui est coaxiale par rapport au sens longitudinal (A) du frein (1), et **en ce que** soit ledit élément de frein fixe (3) forme un corps de bobine (3) globalement en forme de plaque, qui porte un électroaimant, soit ledit élément de frein fixe est conçu comme un flasque situé côté arbre (25) qui comporte des moyens de fixation pour installer le frein sur une attache fixe.

2. Frein électromagnétique (1) selon la revendication 1, **caractérisé en ce que** l'élément chauffant (17) est constitué par un filament chauffant.

3. Frein électromagnétique (1) selon la revendication 2, **caractérisé en ce que** le filament chauffant a une structure bifilaire.

4. Frein électromagnétique (1) selon l'une des revendications précédentes, **caractérisé en ce que** l'élément chauffant (17) est collé dans la rainure de réception (16).

5. Frein électromagnétique (1) selon la revendication 4, **caractérisé en ce qu'**une colle conductrice de chaleur est placée dans la rainure de réception (16).

6. Frein électromagnétique (1) selon l'une des revendications précédentes, **caractérisé en ce qu'**il est prévu une seconde rainure de réception coaxiale (16) dans laquelle est placé un filament chauffant (17).

7. Frein électromagnétique (1) selon la revendication 6, **caractérisé en ce qu'**un second filament chauffant (17) est placé dans la seconde rainure de réception coaxiale (16).

8. Frein électromagnétique (1) selon l'une des revendications précédentes, **caractérisé en ce que** le frein (1) comporte une bobine d'électro-aimant (6) avec des fils d'alimentation électriques (21) qui sortent du frein par une ouverture d'alimentation (20), et **en ce que** l'élément chauffant (17) comporte des fils d'alimentation électriques (22) qui passent eux aussi à travers l'ouverture d'alimentation (20).

9. Frein électromagnétique (1) selon la revendication 8, **caractérisé en ce que** l'élément chauffant (17) est relié à l'ouverture d'alimentation (20) par l'intermédiaire d'une rainure de liaison (19) qui s'étend globalement radialement.

10. Frein électromagnétique (1) selon l'une des revendications précédentes, **caractérisé en ce qu'**il est prévu un espace intérieur de frein (13), entouré par le frein, dans lequel est disposé au moins un élément rotatif, et **en ce que** l'élément chauffant (17) est disposé sur le côté dudit élément fixe tourné vers l'espace intérieur de frein.

11. Frein électromagnétique (1) selon l'une des revendications précédentes, **caractérisé en ce que** le chauffage anti-condensation (15) est disposé dans l'une des surfaces du corps de bobine (3) et du flasque situé côté moteur (25) qui sont voisines.

12. Frein électromagnétique (1) selon l'une des revendications précédentes, **caractérisé en ce qu'**un fil d'alimentation (22) du chauffage anti-condensation (15) sort de l'élément fixe (2a, 2b, 3, 25) du frein dans un sens radial.
